# EUROPEAN PATENT APPLICATION

(11) **EP 4 629 031 A1**
(43) Date of publication of application: **08.10.2025**
(21) Application number: 23897364.8
(22) Date of filing: 01.11.2023
(51) Int. Cl.: G06F 3/01, G06F 3/041

(54) **TACTILE SENSATION PRESENTATION DEVICE**

(30) Priority: 30.11.2022 JP 2022191577
(71) Applicant: Kyocera Corporation, Kyoto-shi, Kyoto 612-8501 (JP)
(72) Inventor: MINAMI, Takashi, Kyoto-shi, Kyoto 612-8501 (JP); KOIKE, Kazushi, Kyoto-shi, Kyoto 612-8501 (JP)
(74) Representative: TBK
(86) International application number: PCT/JP2023/039465
(87) International publication number: WO 2024/116708

(57) **Abstract**

A haptic feedback device includes a vibrator on which a user operation is performed and a first vibration actuator that vibrates the vibrator. The vibrator includes a vibration member and an elastic resin. The vibration member is to be vibrated by the first vibration actuator. The vibration member includes at least one slit. The elastic resin at least includes a portion closing the slit.

## Description

### TECHNICAL FIELD

The present disclosure relates to a haptic feedback technique.

### BACKGROUND OF INVENTION

Patent Literature 1 describes a technique of haptic feedback through vibrations.

### CITATION LIST

### PATENT LITERATURE

Patent Literature 1: Japanese Unexamined Patent Application Publication No. 2011-53745

### SUMMARY

One or more aspects of the present disclosure are directed to a haptic feedback device. In one embodiment, a haptic feedback device includes a vibrator on which a user operation is performed and a first vibration actuator that vibrates the vibrator. The vibrator includes a vibration member and an elastic resin. The vibration member is to be vibrated by the first vibration actuator. The vibration member includes at least one slit. The elastic resin at least includes a portion closing the at least one slit.

### BRIEF DESCRIPTION OF THE DRAWINGS

FIG. 1 is a schematic diagram of an example haptic feedback device.
FIG. 2 is a schematic diagram of an example haptic feedback device.
FIG. 3 is a schematic diagram of an example haptic feedback device.
FIG. 4 is a schematic diagram of an example haptic feedback device.
FIG. 5 is a schematic diagram of an example haptic feedback device.
FIG. 6 is a schematic diagram of an example haptic feedback device.
FIG. 7 is a schematic diagram of an example haptic feedback device.
FIG. 8 is a schematic diagram of an example haptic feedback device.
FIG. 9 is a schematic diagram of an example plate spring.
FIG. 10 is a schematic diagram of an example haptic feedback device.
FIG. 11 is a schematic diagram of an example haptic feedback device.
FIG. 12 is a schematic diagram of an example haptic feedback device.
FIG. 13 is a schematic diagram of an example haptic feedback device.
FIG. 14 is a schematic diagram of an example haptic feedback device.
FIG. 15 is a schematic diagram of an example haptic feedback device.
FIG. 16 is a schematic diagram of an example haptic feedback device.

### DESCRIPTION OF EMBODIMENTS

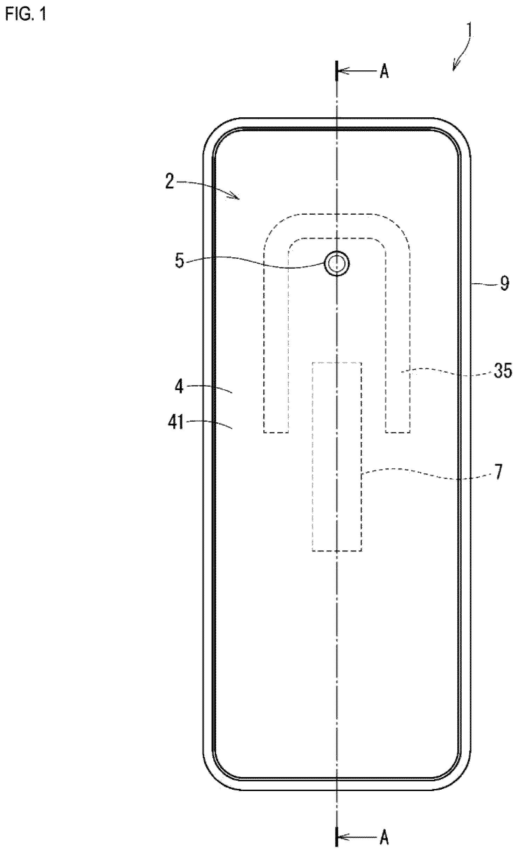

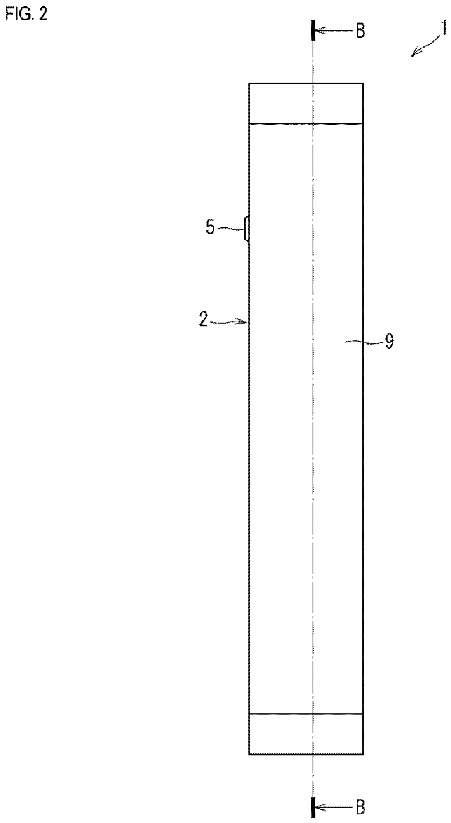

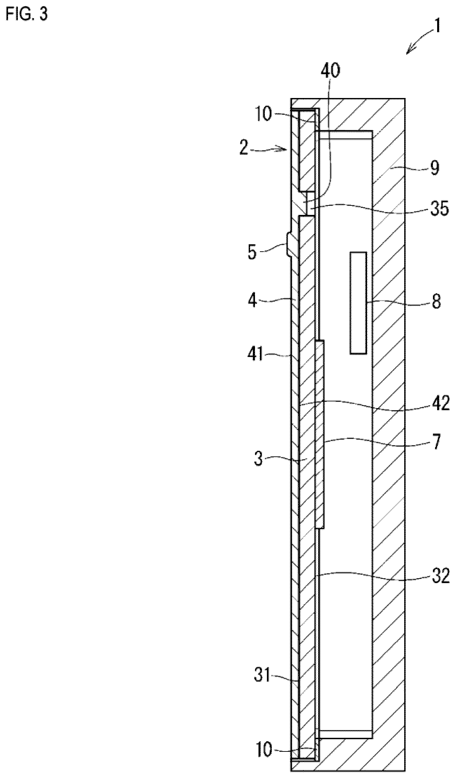

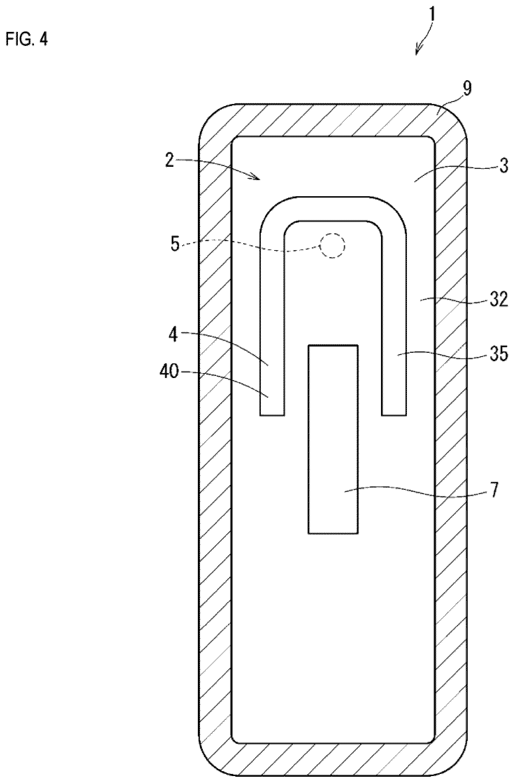

FIGs. 1 to 4 are schematic diagrams of an example haptic feedback device 1. FIG. 2 is a diagram of the haptic feedback device 1 illustrated in FIG. 1 as viewed from the right in FIG. 1. FIG. 3 is a cross-sectional view taken along line A-A in FIG. 1 as viewed in the direction indicated by the arrows. FIG. 4 is a cross-sectional view taken along line B-B in FIG. 2 as viewed in the direction indicated by the arrows. The haptic feedback device 1 provides haptic feedback to a user in response to an operation on the haptic feedback device 1 performed by the user. In the examples described below, for ease of explanation, the top and the bottom of the figures illustrating the haptic feedback device 1 are used as the top and the bottom of the haptic feedback device 1.

As illustrated in FIGs. 1 to 4, the haptic feedback device 1 includes, for example, a vibrator 2 on which user operations are performed, a vibration actuator 7 that vibrates the vibrator 2, a controller 8 that controls the vibration actuator 7, and a housing 9 supporting the vibrator 2. The vibration actuator 7 and the controller 8 are accommodated in the housing 9. The haptic feedback device 1 provides haptic feedback to the user with the vibration actuator 7 vibrating the vibrator 2 in response to an operation on the vibrator 2 performed by the user.

The vibrator 2 includes, for example, a vibration member 3 to be vibrated by the vibration actuator 7, an elastic resin 4, and an operable portion 5 operable by the user. The vibration member 3 includes at least one slit 35. The elastic resin 4 includes at least a portion closing the slit 35. The portion closing the slit 35 may be, for example, a portion filling the slit 35. In other words, the elastic member 4 includes at least a portion filling the slit 35. In the example in FIGs. 1 to 4, the vibration member 3 includes, for example, one slit 35. In the example in FIGs. 1 to 4, the elastic resin 4 fills the slit 35 and covers a surface of the vibration member 3.

The vibration member 3 is, for example, a plate. The vibration member 3 may also be, for example, a panel or a panel member. The vibration member 3 has, for example, a profile of a rectangle with four rounded corners. The shape of the vibration member 3 is not limited to these examples.

The vibration member 3 is made of, for example, a resin. The resin for the vibration member 3 may be, for example, polycarbonate or acrylonitrile butadiene styrene (ABS). The vibration member 3 as a plate includes, for example, a first surface 31 and a second surface 32 opposite the first surface 31. The first surface 31 may also be, for example, a first main surface 31. The second surface 32 may also be, for example, a second main surface 32.

The slit 35 is, for example, an elongated opening extending through the vibration member 3 in a thickness direction of the vibration member 3. The slit 35 may also be referred to as a slot, for example. The vibration member 3 includes, for example, a U-shaped slit 35. The U-shaped slit 35 includes two ends of the U shape facing downward. Note that the slit 35 may be a straight line, instead of U-shaped, or may include multiple straight slits arranged in a U shape.

The vibration actuator 7 is located on, for example, the second surface 32 of the vibration member 3. The vibration actuator 7 is located in, for example, a central portion of the second surface 32. The vibration actuator 7 may be, for example, a piezoelectric element. The vibration actuator 7 is fixed to the second surface 32 with, for example, a binder such as double-sided tape or an adhesive. Hereafter, the vibration actuator 7 being a piezoelectric element may be referred to as a piezoelectric element 7.

The piezoelectric element 7 may be, for example, a ceramic piezoelectric element or a polymer piezoelectric element. The piezoelectric element 7 may be a bimorph or monomorph piezoelectric element.

The piezoelectric element 7 is, for example, elongated unidirectionally. More specifically, the piezoelectric element 7 is an elongated rectangular plate in a plan view. The piezoelectric element 7 is located on the second surface 32 of the vibration member 3 with, for example, a longitudinal direction of the piezoelectric element 7 parallel to a longitudinal direction of the vibration member 3. The piezoelectric element 7 vibrates in a flexural manner to bend in the longitudinal direction in response to a drive signal provided from the controller 8. The piezoelectric element 7 as a plate vibrates in a flexural manner by alternating between a first state in which one main surface of the piezoelectric element 7 bends in a manner protruding outward and a second state in which the other main surface bends in a manner protruding outward. The flexural vibration of the piezoelectric element 7 vibrates the vibrator 2.

The elastic resin 4 is, for example, a sheet. The elastic resin 4 is located on the first surface 31 of the vibration member 3. The elastic resin 4 covers, for example, the entire first surface 31. The elastic resin 4 has a profile of, for example, a rectangle with rounded four corners, in the same manner as or in a similar manner to the vibration member 3. The elastic resin 4 as a sheet includes, for example, a first surface 41 and a second surface 42 opposite the first surface 41. The first surface 41 may also be, for example, a first main surface 41. The second surface 42 may also be, for example, a second main surface 42. The second surface 42 is in contact with the first surface 31 of the vibration member 3.

The elastic resin 4 includes the portion closing the slit 35. The portion closing the slit 35 may be the portion of the elastic resin 4 filling the slit 35. The elastic resin 4 includes a protrusion 40 protruding into the slit 35 from the second surface 42. The protrusion 40 serves as the portion filling the slit 35. The protrusion 40 extends in a longitudinal direction of the slit 35. The slit 35 is entirely filled with the protrusion 40 in the longitudinal direction of the slit 35. In a depth direction (or in other words, in a height direction) of the slit 35, the slit 35 is partially filled with the protrusion 40. The protrusion 40 protruding into the slit 35 from the second surface 42 of the elastic resin 4 does not reach the second surface 32 of the vibration member 3. In the example in FIG. 3, the slit 35 is filled with the protrusion 40 by about a half in the depth direction (or in other words, the height direction). Note that the slit 35 may be filled with the protrusion 40 entirely in the depth direction (or in other words, the height direction).

The elastic resin 4 is, for example, softer than the vibration member 3. More specifically, the elastic resin 4 includes, for example, a resin with a lower modulus of elasticity (e.g., tensile modulus of elasticity) than the vibration member 3. The elastic resin 4 is made of, for example, an elastomer such as a silicone resin or polyurethane.

The housing 9 has, for example, a rectangular parallelepiped shape with one open surface. The housing 9 may also be, for example, a slightly elongated box. The housing 9 may be made of, for example, a resin, a metal, or another material. The vibration member 3 is fixed to, for example, an upper end surface of a peripheral wall of the housing 9. The upper end surface of the peripheral wall of the housing 9 is stepped at its inner periphery. The second surface 32 of the vibration member 3 includes a peripheral edge fixed to a bottom surface of the step on the upper end surface of the peripheral wall of the housing 9 with, for example, a waterproof binder 10. The peripheral edge of the second surface 32 is entirely fixed to the housing 9 with the waterproof binder 10. This structure reduces water or dust entering the housing 9. The waterproof binder 10 may be, for example, waterproof tape or a waterproof adhesive. The vibration actuator 7 and the controller 8 are located in a space defined by the housing 9 and the vibration member 3. The housing 9 and the vibration member 3 can thus together serve as one housing. In this case, the housing 9 may be referred to as a support housing, and the vibration member 3 may be referred to as a vibrator housing. The housing 9 and the vibrator 2 can also together serve as one housing.

The operable portion 5 operable by the user is located on, for example, the first surface 41 of the elastic resin 4. The operable portion 5 is, for example, a protrusion protruding outside the haptic feedback device 1 from the first surface 41 of the elastic resin 4. The operable portion 5 may also be, for example, an operation button. The operable portion 5 is made of, for example, the same material as the elastic resin 4 and integral with the elastic resin 4. In this case, a part of the elastic resin 4 may serve as the operable portion 5.

The operable portion 5 is located in the middle of the first surface 41 in a lateral direction (right-left direction in FIG. 1) of the first surface 41 of the elastic resin 4. The operable portion 5 is located above the middle of the first surface 41 in a longitudinal direction of the first surface 41 (vertical direction in FIG. 1). The haptic feedback device 1 provides haptic feedback to the user with the vibration actuator 7 vibrating the vibrator 2 in response to an operation on the operable portion 5 performed by the user.

The vibration member 3 and the portion including the elastic resin 4 and the operable portion 5 may be formed integral with each other by, for example, two-shot molding. Note that the vibration member 3 and the portion including the elastic resin 4 and the operable portion 5 may be produced separately and attached together with a binder such as double-sided tape or an adhesive. The binder may be waterproof. The operable portion 5 may be made of a material different from the material of the elastic resin 4. For example, the operable portion 5 may be made of the same material as the vibration member 3 or another material such as a metal.

In the example below, a first plan view refers to a view of the haptic feedback device 1 in which the piezoelectric element 7 and the slit 35 are viewed in plan from the second surface 32 of the vibration member 3 and the operable portion 5 is viewed in plan in a transparent manner from the second surface 32 of the vibration member 3. As illustrated in FIG. 4, in the first plan view, the piezoelectric element 7 and the operable portion 5 are aligned in the longitudinal direction of the piezoelectric element 7. As illustrated in FIG. 4, in the first plan view, the operable portion 5 is located between the slit 35 and the piezoelectric element 7 in the longitudinal direction of the piezoelectric element 7. In other words, in the first plan view, the operable portion 5 is located between the middle of the piezoelectric element 7 and the slit 35 in the longitudinal direction of the piezoelectric element 7. In the first plan view, the piezoelectric element 7 includes a substantially upper half portion in the longitudinal direction surrounded by the U-shaped slit 35. When the operable portion 5 is operated, or more specifically, pressed, the vibration member 3 deforms to bend the piezoelectric element 7, which then generates an electromotive force.

The controller 8 is, for example, a circuit board including circuitry. The controller 8 can provide a drive voltage to the piezoelectric element 7 to cause flexural vibration of the piezoelectric element 7. The controller 8 can determine that the operable portion 5 is operated based on the electromotive force generated in the piezoelectric element 7 in response to the operation on the operable portion 5. The controller 8 and the piezoelectric element 7 are electrically connected with a cable.

All or at least one of the functions of the controller 8 may be implemented by a hardware circuit without involving software. As described later in further detail, the controller 8 may include at least one processor to provide control and throughput to perform various functions.

In various embodiments, at least one processor may be implemented as a single integrated circuit (IC) or as at least one of multiple integrated circuits (ICs) or multiple discrete circuits connected to one another for communication. The processor may be implemented based on various known techniques.

In one embodiment, the processor includes, for example, one or more circuits or units configured to perform one or more data computation procedures or processes by executing instructions stored in a relevant memory. In another embodiment, the processor may be firmware (e.g., a discrete logic component) configured to perform one or more data computation procedures or processes.

In various embodiments, the processor may include one or more processors, a controller, a microprocessor, a microcontroller, an application specific integrated circuit (ASIC), a digital signal processor, a programmable logic device, a field programmable gate array, a combination of any two or more of these devices or components, or a combination of any two or more of other known devices or components to implement the functions described below.

In this example, the controller 8 includes a microcomputer including, for example, a central processing unit (CPU), a memory, an A-D converter, and an amplifier. The controller 8 may also be, for example, a control circuit. The controller 8 may also be, for example, a computer device.

The controller 8 amplifies, for example, an electromotive force (also referred to as an output voltage) generated in the piezoelectric element 7 in response to pressing on the operable portion 5 and uses the amplified electromotive force as a bending level indicating the degree by which the piezoelectric element 7 is bent. The controller 8 converts the bending level through A-D conversion, and determines, based on the bending level resulting from the A-D conversion, that the operable portion 5 is operated. After determining that the operable portion 5 is operated, the controller 8 generates a drive signal to drive the piezoelectric element 7 and provides the generated drive signal to the piezoelectric element 7 to cause flexural vibration of the piezoelectric element 7. In response to the flexural vibration of the piezoelectric element 7, the vibrator 2 vibrates to vibrate the operable portion 5. This vibration provides haptic feedback to, for example, the finger pressing the operable portion 5.

When determining that the operable portion 5 is operated, the controller 8 may notify a device external to the haptic feedback device 1 (also simply referred to as an external device) of the operation on the operable portion 5 through at least one of wired communication or wireless communication. In response to the notification indicating the operation on the operable portion 5, the external device performs a predetermined process. For example, the external device may cause a display included in the external device to perform a predetermined display or may control another machine. The external device may provide a predetermined notification to a device other than the external device or the haptic feedback device 1 through at least one of wired communication or wireless communication. For the haptic feedback device 1 including a display, the controller 8 determining that the operable portion 5 is operated may cause the display to perform a predetermined display. For the haptic feedback device 1 including an audio output device such as a buzzer or a speaker, the controller 8 determining that the operable portion 5 is operated may cause the audio output device to output a sound.

As described above, in the haptic feedback device 1, the vibration member 3 including the slit 35 can be vibrated easily. Thus, the vibration member 3 fixed to the housing 9 with the waterproof binder 10 as in the present example can be vibrated easily. The elastic resin 4 includes the portion filling the slit 35. This can reduce water or dust entering the housing 9 through the slit 35 while allowing the vibration member 3 to vibrate easily.

When the vibration actuator 7 is a piezoelectric element as in the present example, the vibrator 2 can be determined as being operated based on an electromotive force generated in the piezoelectric element 7. This eliminates any additional member for detecting an operation on the vibrator 2, such as a touchscreen, separately from the vibration actuator 7. For the haptic feedback device 1 including a touchscreen, the operation of the touchscreen for detecting the operation performed on the operable portion 5 can be disabled. This reduces power consumption of the haptic feedback device 1 including the touchscreen.

Note that the vibration actuator 7 may be a component other than the piezoelectric element. For example, the vibration actuator 7 may be a vibration motor or another component that vibrates the vibrator 2. When the vibration actuator 7 is a component other than the piezoelectric element, the vibration member 3 may be, for example, a touchscreen that detects a touch operation performed by the user. In this case, the controller 8 can determine that the operable portion 5 is operated based on an output signal from the touchscreen. The controller 8 may determine that the first surface 41 of the elastic resin 4 is operated based on the output signal from the touchscreen and provide haptic feedback to the user by vibrating the vibration actuator 7 in response to determining that the operation is performed.

In the above example, the elastic resin 4 covers the entire first surface 31 of the vibration member 3, but may cover a part of the first surface 31 or may not cover the first surface 41 of the vibration member 3. In other words, the elastic resin 4 may cover the slit 35 alone, without covering the surface of the vibration member 3. For example, the elastic resin 4 may simply be the portion filling the slit 35. The elastic resin 4 has any shape that at least fills the slit 35.

When the elastic resin 4 is simply the portion filling the slit 35, water or dust may enter the housing 9 through a boundary surface between an inner wall of the slit 35 and the elastic resin 4. In contrast, as in the example in FIGs. 1 to 4, the elastic resin 4 covering the surface of the vibration member 3 while filling the slit 35 can further reduce water or dust entering the housing 9 through the slit 35.

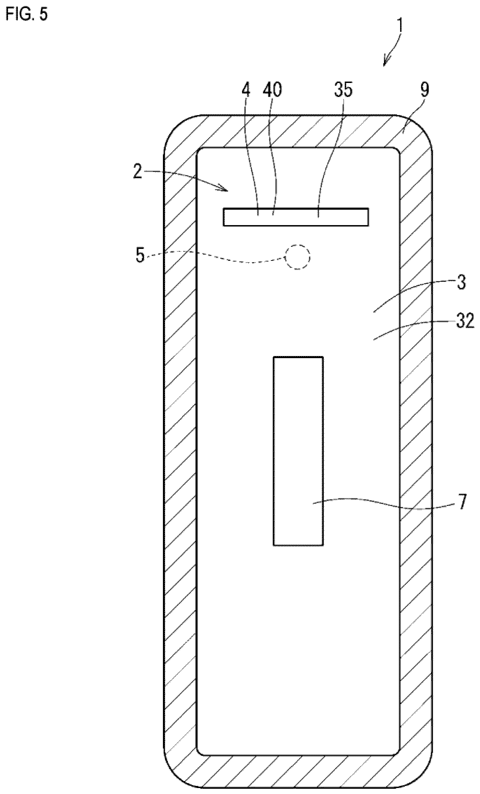

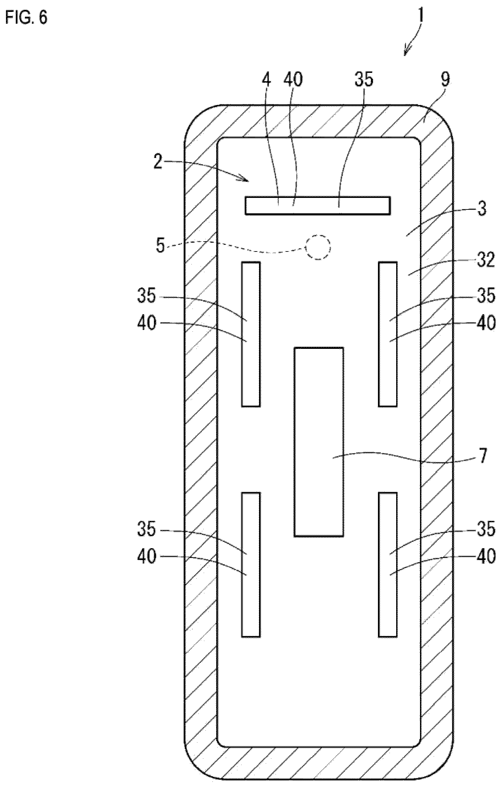

The shape of the slit 35 and the number of slits 35 are not limited to the above examples. FIGs. 5 and 6 are schematic diagrams of the slit or slits 35 in other examples. FIGs. 5 and 6 correspond to FIG. 4. In the example in FIG. 5, the vibration member 3 includes one straight slit 35. In the example in FIG. 5 as well, the operable portion 5 is located between the slit 35 and the piezoelectric element 7 in the longitudinal direction of the piezoelectric element 7 in the first plan view.

In the example in FIG. 6, the vibration member 3 includes five straight slits 35. The vibration member 3 in the example in FIG. 6 includes four more straight slits 35 than the vibration member 3 in the example in FIG. 5. The elastic resin 4 includes five protrusions 40 filling the respective five slits 35. When the piezoelectric element 7 and the five slits 35 are viewed in plan from the second surface 32, the piezoelectric element 7 is surrounded by the five slits 35.

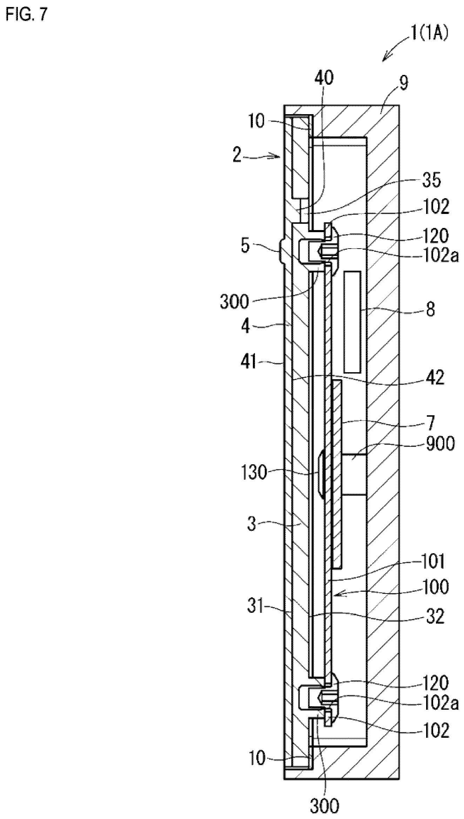

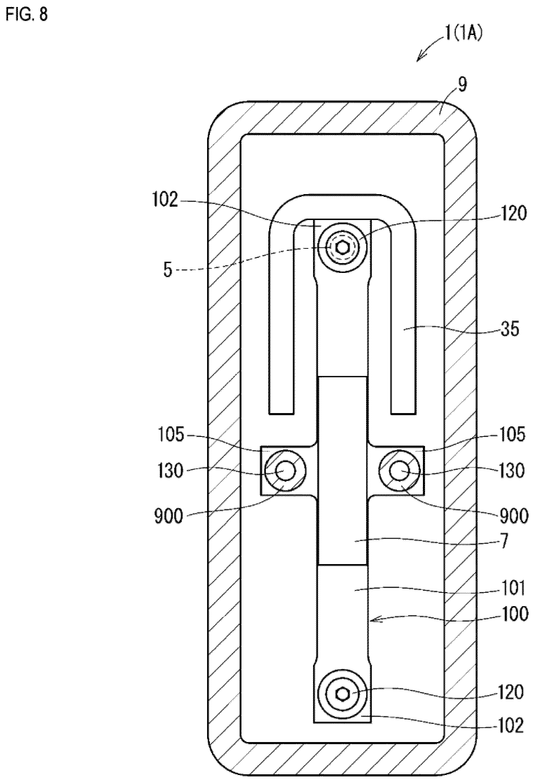

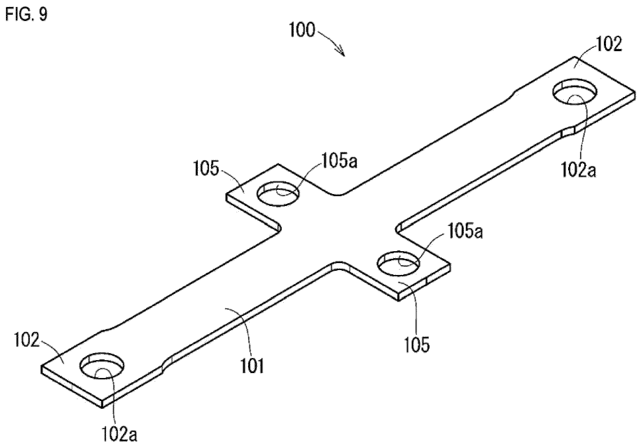

In the above examples, the vibration actuator 7 is directly fixed to the vibration member 3. However, as illustrated in FIGs. 7 and 8, a plate spring 100 fixed to the vibration actuator 7 may be fixed to the vibration member 3. FIGs. 7 and 8 correspond to FIGs. 3 and 4, respectively. FIG. 9 is a schematic diagram of an example of the plate spring 100. Hereafter, the haptic feedback device 1 illustrated in FIGs. 7 and 8 may also be referred to as a haptic feedback device 1A.

The plate spring 100 can amplify vibrations of the piezoelectric element 7 to transmit the amplified vibrations to the vibration member 3. The plate spring 100 may also be a vibration amplifier. The plate spring 100 is made of, for example, a metal. The plate spring 100 includes, for example, a plate spring portion 101 and two fastening portions 105. The profile of the plate spring portion 101 is substantially rectangular. The plate spring portion 101 includes fastening portions 102 at its two ends. Each of the fastening portions 102 includes a through-hole 102a. Each of the fastening portions 102 is fastened to the vibration member 3 with a screw 120.

The two fastening portions 105 protrude outward in opposite directions from the middle of the plate spring portion 101 in a longitudinal direction of the plate spring portion 101. The plate spring portion 101 and the two fastening portions 105 define a cross shape. Each of the fastening portions 105 includes a through-hole 105a. Each of the fastening portions 105 is fastened to the housing 9 with a screw 130.

The plate spring portion 101 is longer than the piezoelectric element 7. The piezoelectric element 7 is fixed to a middle portion of the plate spring portion 101 with a binder such as an epoxy resin, with the longitudinal direction of the piezoelectric element 7 parallel to the longitudinal direction of the plate spring portion 101.

In the haptic feedback device 1A, the housing 9 includes two bosses 900 protruding inward. Each of the bosses 900 includes a threaded hole. The two fastening portions 105 in the plate spring 100 are fastened to the respective two bosses 900 in the housing 9 with the screws 130. After the screws 130 are placed through the through-holes 105a in the fastening portions 105, the screws 130 are screwed into the screw holes of the bosses 900. This fastens the fastening portions 105 to the bosses 900 with screws.

In the haptic feedback device 1A, the vibration member 3 includes two bosses 300 protruding from the second surface 32. Each of the bosses 300 includes a screw hole. The two fastening portions 102 of the plate spring portion 101 at the two ends are fastened to the respective two bosses 300 with the screws 120. After the screws 120 are placed through the through-holes 102a in the fastening portions 102, the screws 120 are screwed into the screw holes of the bosses 300. This fastens the fastening portions 102 to the bosses 300 with screws.

The operable portion 5 faces an upper one of the fastening portions 102 of the plate spring portion 101 in a thickness direction of the vibrator 2, with the elastic resin 4 and the vibration member 3 located between the operable portion 5 and the upper fastening portion 102. When the operable portion 5 is pressed, the upper fastening portion 102 of the plate spring portion 101 is pressed to bend the plate spring portion 101 about the fastening portions 105 as fulcrums. The piezoelectric element 7 thus bends and generates an electromotive force. When determining that the operable portion 5 is operated based on the electromotive force generated in the piezoelectric element 7, the controller 8 causes the piezoelectric element 7 to vibrate in a flexural manner. The flexural vibration of the piezoelectric element 7 causes flexural vibration of the plate spring portion 101. Thus, the vibrations of the piezoelectric element 7 are amplified and transmitted to the vibrator 2. This can provide haptic feedback efficiently to, for example, the finger touching the operable portion 5.

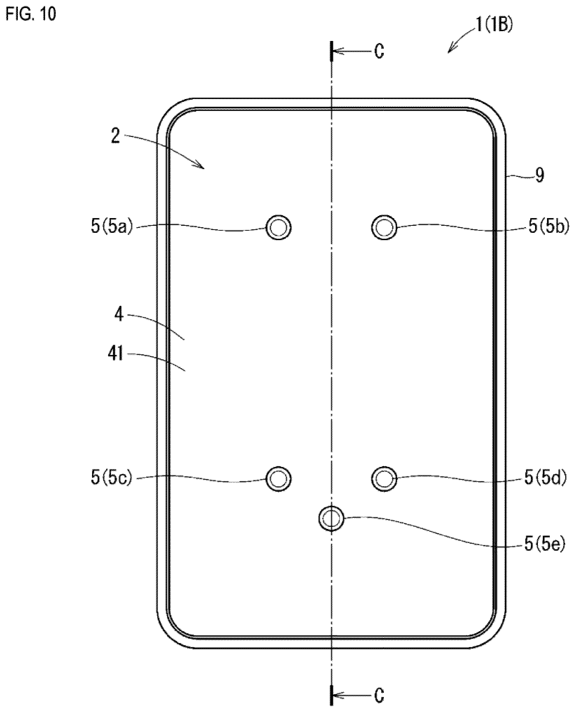

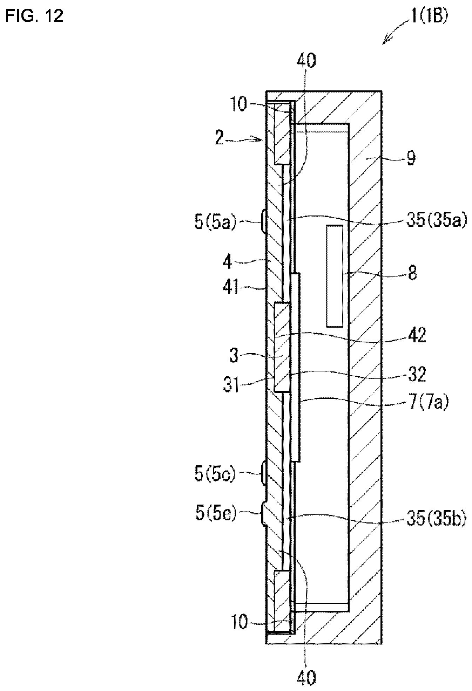

In the above examples, the haptic feedback device 1 includes one operable portion 5, but may include multiple operable portions 5. The haptic feedback device 1 may also include multiple vibration actuators 7. FIGs. 10 to 13 are schematic diagrams of an example of the haptic feedback device 1 including multiple operable portions 5 and multiple vibration actuators 7. Hereafter, the haptic feedback device 1 illustrated in FIGs. 10 to 13 may be referred to as a haptic feedback device 1B.

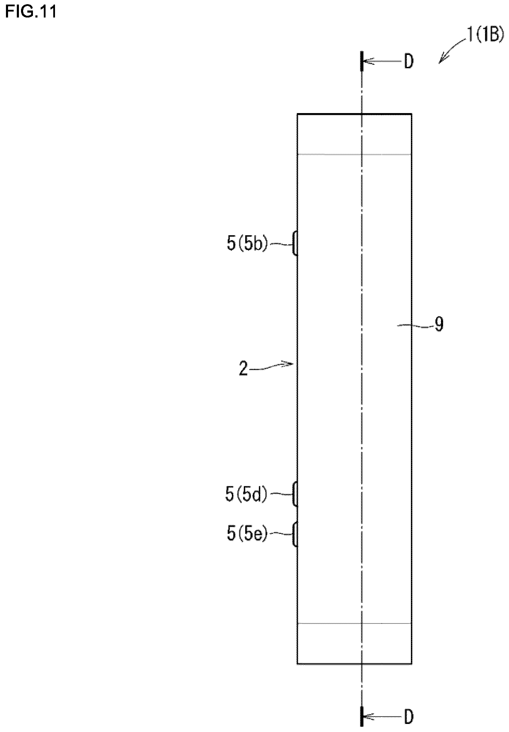

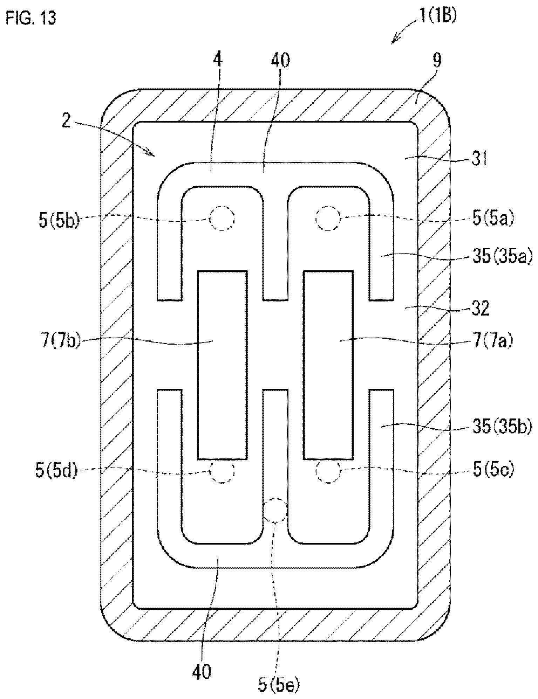

FIG. 11 illustrates an example of the haptic feedback device 1B in FIG. 10 as viewed from the right in FIG. 10. FIG. 13 is a cross-sectional view taken along line C-C in FIG. 10 as viewed in the direction indicated by the arrows. FIG. 13 is a cross-sectional view taken along line D-D in FIG. 11 as viewed in the direction indicated by the arrows.

As illustrated in FIGs. 10 to 13, the haptic feedback device 1B includes, for example, five operable portions 5 (also referred to as operable portions 5a to 5d), two vibration actuators 7 (vibration actuators 7a and 7b), and two slits 35 (also referred to as slits 35a and 35b). The vibration actuators 7a and 7b are, for example, piezoelectric elements 7a and 7b. The controller 8 can cause, for example, the piezoelectric elements 7a and 7b to vibrate independently of each other. The controller 8 can determine, among the operable portions 5a to 5d, the operable portion 5 being operated based on the electromotive force generated in the piezoelectric elements 7a and 7b.

The operable portions 5a and 5b are located above the middle on the first surface 41 of the elastic resin 4. The operable portions 5a and 5b are aligned in the lateral direction of the first surface 41. The operable portions 5c, 5d, and 5e are located below the middle on the first surface 41. The operable portions 5c and 5d are aligned in the lateral direction of the first surface 41. The operable portion 5e is located below the operable portions 5c and 5d. The operable portion 5e is in the middle of the first surface 41 in the lateral direction of the first surface 41. The operable portion 5a and the operable portion 5c are aligned in the longitudinal direction of the first surface 41. The operable portion 5b and the operable portion 5d are aligned in the longitudinal direction of the first surface 41.

The slit 35a is located above the middle in the vibration member 3. The slit 35b is located below the middle in the vibration member 3. Each of the slits 35a and 35b is, for example, E-shaped. The slit 35a includes, for example, open ends defined by the three parallel lines of the letter E facing downward. The slit 35b includes, for example, open ends defined by the three parallel lines of the letter E facing upward.

The piezoelectric elements 7a and 7b are fixed to the second surface 32 of the vibration member 3. The piezoelectric elements 7a and 7b are aligned in the lateral direction of the second surface 32. The piezoelectric elements 7a and 7b have their longitudinal directions parallel to the longitudinal direction of the second surface 32. When the piezoelectric elements 7a and 7b and the slits 35a and 35b are viewed in plan from the second surface 32 as illustrated in FIG. 13, the piezoelectric elements 7a and 7b include upper ends located in two spaces defined by the three parallel lines of the letter E of the upper slit 35a, and include substantially lower half portions located in two spaces defined by the three parallel lines of the letter E of the lower slit 35b.

In the example below, a second plan view refers to a view of the haptic feedback device 1B in which the piezoelectric elements 7a and 7b and the slits 35a and 35b are viewed in plan from the second surface 32 of the vibration member 3 and the operable portions 5a to 5e are viewed in plan in a transparent manner from the second surface 32 of the vibration member 3. As illustrated in FIG. 13, in the second plan view, the operable portions 5a and 5b are above the piezoelectric elements 7a and 7b. The operable portions 5c and 5d are mostly located below the piezoelectric elements 7a and 7b. The operable portion 5e is located below the piezoelectric elements 7a and 7b.

In the second plan view, the piezoelectric element 7a and the operable portion 5a are aligned in the longitudinal direction of the piezoelectric element 7a. The operable portion 5a is located between the piezoelectric element 7a and the slit 35a in the longitudinal direction of the piezoelectric element 7a. In other words, in the second plan view, the operable portion 5a is located between the middle of the piezoelectric element 7a and the slit 35a in the longitudinal direction of the piezoelectric element 7a.

In the second plan view, the piezoelectric element 7b and the operable portion 5b are aligned in the longitudinal direction of the piezoelectric element 7b. The operable portion 5b is located between the piezoelectric element 7b and the slit 35a in the longitudinal direction of the piezoelectric element 7b. In other words, in the second plan view, the operable portion 5b is located between the middle of the piezoelectric element 7b and the slit 35a in the longitudinal direction of the piezoelectric element 7b.

In the second plan view, the operable portion 5c is located between the middle of the piezoelectric element 7a and the slit 35b in the longitudinal direction of the piezoelectric element 7a and slightly overlaps a lower end of the piezoelectric element 7a. In the second plan view, the operable portion 5d is located between the middle of the piezoelectric element 7b and the slit 35b in the longitudinal direction of the piezoelectric element 7b and slightly overlaps a lower end of the piezoelectric element 7b. In the second plan view, the operable portion 5e overlaps the slit 35b. More specifically, in the second plan view, the operable portion 5e overlaps the middle one of the three parallel lines of the letter E of the slit 35b.

The haptic feedback device 1B is configured to change the bending degrees of the piezoelectric elements 7a and 7b based on the operable portion 5 being operated. Thus, the controller 8 can easily determine, among the multiple operable portions 5, the operable portion 5 being operated. The bending degrees of the piezoelectric elements 7a and 7b are determined by, for example, the shape of the slits 35 and the positional relationship between the slits 35, the piezoelectric elements 7, and the operable portions 5.

When either the operable portion 5a or 5c is pressed, the piezoelectric element 7a bends easily whereas the piezoelectric element 7b bends less easily. Thus, when either the operable portions 5a or 5c is pressed, the electromotive force (also referred to as a first electromotive force) generated in the piezoelectric element 7a is greater than the electromotive force (also referred to as a second electromotive force) generated in the piezoelectric element 7b. In the haptic feedback device 1B, the piezoelectric element 7a bends more when the operable portion 5c is pressed than when the operable portion 5a is pressed with the same magnitude of force. Thus, the first electromotive force generated when the operable portion 5c is pressed with a specific magnitude of force is greater than when the operable portion 5a is pressed with the same magnitude of force as the specific magnitude of force. When the first electromotive force is relatively greater than the second electromotive force, the controller 8 determines that the operable portion 5a is operated. When the first electromotive force is notably greater than the second electromotive force, the controller 8 determines that the operable portion 5c is operated.

The bending level obtained by the controller 8 amplifying the first electromotive force is referred to as a first bending level. The bending level obtained by the controller 8 amplifying the second electromotive force is referred to as a second bending level. The controller 8 determines that the operable portion 5a is operated when a value obtained by subtracting the second bending level from the first bending level is greater than or equal to a first threshold and less than a second threshold. The first threshold is greater than zero, and the second threshold is greater than the first threshold. In contrast, the controller 8 determines that the operable portion 5c is operated when a value obtained by subtracting the second bending level from the first bending level is greater than or equal to the second threshold.

When either the operable portion 5b or 5d is pressed, the piezoelectric element 7b bends easily whereas the piezoelectric element 7a bends less easily. Thus, when either the operable portion 5b or 5d is pressed, the second electromotive force is greater than the first electromotive force. In the haptic feedback device 1B, the piezoelectric element 7b bends more when the operable portion 5d is pressed than when the operable portion 5b is pressed with the same magnitude of force. Thus, the second electromotive force generated when the operable portion 5d is pressed with a specific magnitude of force is greater than the second electromotive force generated when the operable portion 5b is pressed with the same magnitude of force as the specific magnitude of force.

When the second electromotive force is relatively greater than the first electromotive force, the controller 8 determines that the operable portion 5b is operated. When the second electromotive force is notably greater than the first electromotive force, the controller 8 determines that the operable portion 5d is operated. More specifically, the controller 8 determines that the operable portion 5b is operated when a value obtained by subtracting the first bending level from the second bending level is greater than or equal to a third threshold and less than a fourth threshold. The third threshold is greater than zero, and the fourth threshold is greater than the third threshold. The third threshold may be the same as or different from the first threshold. The fourth threshold may be the same as or different from the second threshold. In contrast, the controller 8 determines that the operable portion 5d is operated when a value obtained by subtracting the first bending level from the second bending level is greater than or equal to the fourth threshold.

When the operable portion 5e is pressed, the piezoelectric elements 7a and 7b have substantially the same bending degree. Thus, when the operable portion 5e is pressed, the first electromotive force and the second electromotive force are substantially the same. The controller 8 determines that the operable portion 5e is operated when the first electromotive force and the second electromotive force have a relatively great magnitude of force and have a sufficiently small difference between them. More specifically, the controller 8 determines that the operable portion 5e is operated when each of the first and second bending levels is greater than or equal to a fifth threshold and the absolute value of the difference between the first bending level and the second bending level is less than a sixth threshold. The fifth threshold is greater than zero. The sixth threshold is less than the first threshold and the third threshold, and greater than or equal to zero.

When determining that the operable portion 5a is operated, the controller 8 causes, of the piezoelectric elements 7a and 7b, the piezoelectric element 7a alone to vibrate, for example. This provides haptic feedback to, for example, the finger touching the operable portion 5a. When determining that the operable portion 5c is operated, the controller 8 causes, of the piezoelectric elements 7a and 7b, the piezoelectric element 7a alone to vibrate, for example. This provides haptic feedback to, for example, the finger touching the operable portion 5c. Note that when determining that the operable portion 5a is operated, the controller 8 may cause, of the piezoelectric elements 7a and 7b, the piezoelectric element 7b alone to vibrate or cause both the piezoelectric elements 7a and 7b to vibrate. The same or a similar structure applies when the operable portion 5c is operated.

When determining that the operable portion 5b is operated, the controller 8 causes, of the piezoelectric elements 7a and 7b, the piezoelectric element 7b alone to vibrate, for example. This provides haptic feedback to, for example, the finger touching the operable portion 5b. When determining that the operable portion 5d is operated, the controller 8 causes, of the piezoelectric elements 7a and 7b, the piezoelectric element 7b alone to vibrate, for example. This provides haptic feedback to, for example, the finger touching the operable portion 5d. Note that when determining that the operable portion 5b is operated, the controller 8 may cause, of the piezoelectric elements 7a and 7b, the piezoelectric element 7a alone to vibrate or cause both the piezoelectric elements 7a and 7b to vibrate. The same or a similar structure applies when the operable portion 5d is operated.

When determining that the operable portion 5e is operated, the controller 8 causes, for example, both the piezoelectric elements 7a and 7b to vibrate. This provides haptic feedback to, for example, the finger touching the operable portion 5e. Note that when determining that the operable portion 5e is operated, the controller 8 may cause, of the piezoelectric elements 7a and 7b, the piezoelectric element 7a alone or the piezoelectric element 7b alone to vibrate.

The haptic feedback device 1B may eliminate one or more of the operable portions 5a to 5d. For example, the haptic feedback device 1B may eliminate the operable portion 5e. The haptic feedback device 1B may eliminate the operable portions 5b, 5d, and 5e. In this case, the piezoelectric element 7b is unused. The controller 8 determines that the operable portion 5a is operated when the electromotive force generated in the piezoelectric element 7a is relatively large, and determines that the operable portion 5c is operated when the electromotive force generated in the piezoelectric element 7a is notably large. More specifically, the controller 8 determines that the operable portion 5a is operated when the first bending level is greater than or equal to a seventh threshold and less than an eighth threshold. The seventh threshold is greater than zero. The eighth threshold is less than the seventh threshold. In contrast, the controller 8 determines that the operable portion 5c is operated when the first bending level is greater than or equal to the eighth threshold.

The haptic feedback device 1B may eliminate the operable portions 5a, 5c, and 5e. In this case, the piezoelectric element 7a is unused. The controller 8 determines that the operable portion 5b is operated when the electromotive force generated in the piezoelectric element 7b is relatively large, and determines that the operable portion 5d is operated when the electromotive force generated in the piezoelectric element 7b is notably great. The specific operation of the controller 8 for the determination is the same as or similar to the operation performed when the haptic feedback device 1B does not include the operable portions 5b, 5d, and 5e.

The haptic feedback device 1B may eliminate the operable portions 5c, 5d, and 5e. In this case, the controller 8 determines that the operable portion 5a is operated when, for example, a value obtained by subtracting the second bending level from the first bending level is greater than or equal to the first threshold. In contrast, the controller 8 determines that the operable portion 5b is operated when, for example, a value obtained by subtracting the first bending level from the second bending level is greater than or equal to the third threshold.

The haptic feedback device 1B may eliminate the operable portions 5a, 5b, and 5e. In this case, the controller 8 determines that the operable portion 5c is operated when, for example, a value obtained by subtracting the second bending level from the first bending level is greater than or equal to the second threshold. In contrast, the controller 8 determines that the operable portion 5d is operated when, for example, a value obtained by subtracting the first bending level from the second bending level is greater than or equal to the fourth threshold.

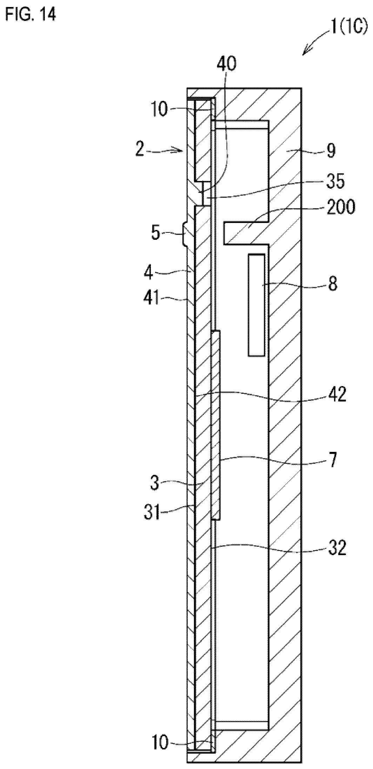

The haptic feedback device 1 may include a stopper 200 that stops deformation of the vibration member 3 resulting from an operation on the operable portion 5. FIG. 14 is a schematic diagram of an example of the haptic feedback device 1 illustrated in FIGs. 1 to 4 with the stopper 200 added. FIG. 14 corresponds to FIG. 3. Hereafter, the haptic feedback device 1 illustrated in FIG. 14 may be referred to as a haptic feedback device 1C.

The stopper 200 is, for example, cylindrical or prism-shaped. The stopper 200 extends from an inner surface of the housing 200. A clearance is left between an upper end surface of the stopper 200 and the second surface 32 of the vibrator 2. The stopper 200 is, for example, made of the same material as or a similar material to the housing 200 and integral with the housing 200. Note that the stopper 200 and the housing 200 may be produced separately and then attached to each other with a binder such as double-sided tape or an adhesive. The stopper 200 may be made of a material different from the material of the housing 9.

The operable portion 5 faces the upper end surface of the stopper 200 in the thickness direction of the vibrator 2 with the elastic resin 4 and the vibration member 3 between the operable portion 5 and the upper end surface. When the operable portion 5 is pressed, the second surface 32 of the vibration member 3 comes in contact with the upper end surface of the stopper 200, stopping the deformation of the vibration member 3. In other words, the stopper 200 is a portion that stops deformation of the vibration member 3 resulting from pressing on the operable portion 5.

In this example, the user of the haptic feedback device 1C presses the operable portion 5 until the vibration member 3 comes in contact with the stopper 200. When the operable portion 5 is pressed to cause the vibration member 3 to come in contact with the stopper 200, the controller 8 determines that the operation is performed on the operable portion 5 based on the electromotive force generated in the piezoelectric element 7, and provides haptic feedback to the user by causing the piezoelectric element 7 to vibrate.

As described above, the haptic feedback device 1C includes the stopper 200 that stops deformation of the vibration member 3 resulting from an operation on the operable portion 5, thus reducing excess deformation of the vibration member 3.

Note that the haptic feedback device 1B may also include the stopper 200. In this case, the stopper 200 includes, for example, its upper end surface facing the head of the screw 120 fastening the upper fastening portion 102 of the plate spring 100 to the vibration member 3, with a clearance left between the head of the screw 120 and upper end surface of the stopper 200. When the operable portion 5 is pressed, the head of the screw 120 comes in contact with the upper end surface of the stopper 200, stopping the deformation of the vibration member 3.

The haptic feedback device 1C described above may also include multiple stoppers 200 corresponding to respective multiple operable portions 5. In this case, when any of the operable portions 5 is operated to deform the vibration member 3, one of the stoppers 200 corresponding to the operable portion 5 being operated stops the deformation.

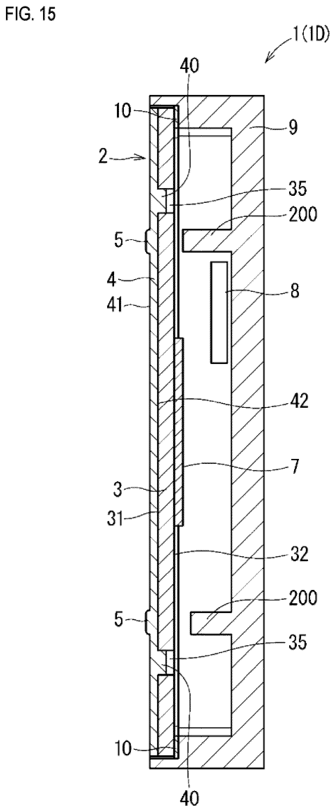

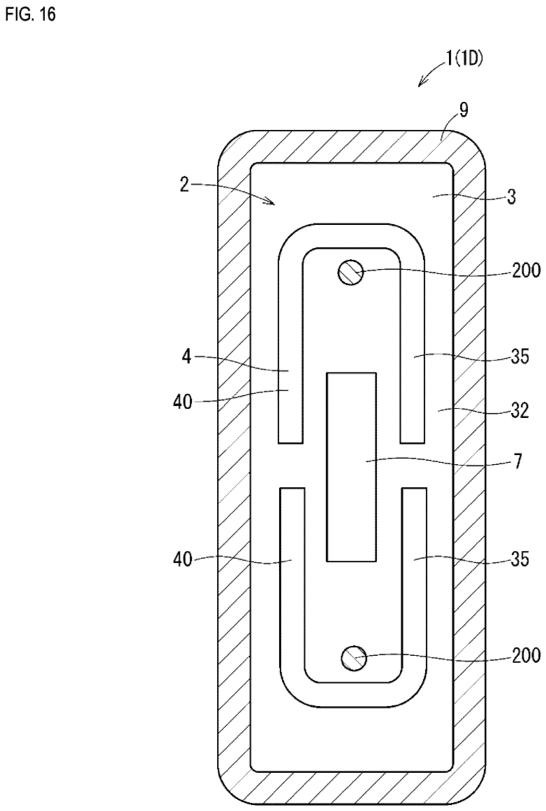

The multiple stoppers 200 corresponding to the multiple operable portions 5 may have different height positions. FIGs. 15 and 16 are schematic diagrams of an example of the haptic feedback device 1 including two operable portions 5 and two stoppers 200 corresponding to the two operable portions 5. The haptic feedback device 1 (also referred to as a haptic feedback device 1D) illustrated in FIGs. 15 and 16 is the haptic feedback device 1 illustrated in FIGs. 1 to 4 to which one operable portion 5, one slit 35, and two stoppers 200 are added. FIGs. 15 and 16 are diagrams corresponding to the diagrams in FIGs. 3 and 4.

The haptic feedback device **1D** includes one of the operable portions 5 located above the middle on the first surface 31 of the elastic resin 4 (also referred to as an upper operable portion 5) and the other of the operable portions 5 located below the middle on the first surface 31 of the elastic resin 4 (also referred to as a lower operable portion 5). The upper operable portion 5 and the lower operable portion 5 are aligned in the longitudinal direction of the first surface 31.

The haptic feedback device **1D** includes one of the stoppers 200 that stops deformation of the vibration member 3 when the upper operable portion 5 is operated (also referred to as an upper stopper 200) and the other of the stoppers 200 that stops deformation of the vibration member 3 when the lower operable portion 5 is operated (also referred to as a lower stopper 200). The upper operable portion 5 faces an upper end surface of the upper stopper 200 in the thickness direction of the vibrator 2 with the elastic resin 4 and the vibration member 3 between the upper operable portion 5 and the upper end surface of the upper stopper 200. When the upper operable portion 5 is pressed, the second surface 32 of the vibration member 3 comes in contact with the upper end surface of the upper stopper 200, stopping the deformation of the vibration member 3. The lower operable portion 5 faces an upper end surface of the lower stopper 200 in the thickness direction of the vibrator 2 with the elastic resin 4 and the vibration member 3 located between the lower operable portion 5 and the upper end surface of the lower stopper 200. When the lower operable portion 5 is pressed, the second surface 32 of the vibration member 3 comes in contact with the upper end surface of the lower stopper 200, stopping the deformation of the vibration member 3.

The upper stopper 200 has, for example, a higher height position than the lower stopper 200. The height position of each of the stoppers 200 may also be the position of the upper end (in other words, upper end surface) of the stopper 200. In this example, the distance between the upper stopper 200 and the vibration member 3 when the vibrator 2 is not operated is smaller than the distance between the lower stopper 200 and the vibration member 3 when the vibrator 2 is not operated. The clearance between the upper stopper 200 and the vibration member 3 when the vibrator 2 is not operated has a smaller length than the clearance between the lower stopper 200 and the vibration member 3 when the vibrator 2 is not operated. The degree by which the upper operable portion 5 is pressed before the vibration member 3 comes in contact with the upper stopper 200 is smaller than the degree by which the lower operable portion 5 is pressed before the vibration member 3 comes in contact with the lower stopper 200. The degree by which the upper operable portion 5 is pressed and the degree by which the lower operable portion 5 is pressed affect the bending degree of the piezoelectric element 7.

The haptic feedback device 1D includes a slit 35 located above the middle on the second surface 32 of the vibration member 3 (also referred to as an upper slit 35) and a slit 35 located below the middle on the second surface 32 of the vibration member 3 (also referred to as a lower slit 35). Each of the upper slit 35 and the lower slit 35 is, for example, U-shaped. The upper slit 35 and the lower slit 35 have the same shape and are vertically symmetric with respect to the center of the second surface 32.

When the piezoelectric element 7 and the upper slit 35 are viewed in plan from the second surface 32, a substantially upper half portion of the piezoelectric element 7 in the longitudinal direction is surrounded by the U-shaped upper slit 35. When the piezoelectric element 7 and the lower slit 35 are viewed in plan from the second surface 32, a substantially lower half portion of the piezoelectric element 7 in the longitudinal direction is surrounded by the U-shaped lower slit 35.

In the haptic feedback device 1D, the upper stopper 200 and the lower stopper 200 have different height positions, causing a difference in bending degree of the piezoelectric element 7 between when the upper operable portion 5 is operated and when the lower operable portion 5 is operated. More specifically, the upper stopper 200 has a higher height position than the lower stopper 200. Thus, the bending degree of the piezoelectric element 7 resulting from an operation on the upper operable portion 5 (specifically, the bending degree of the piezoelectric element 7 resulting from the vibration member 3 coming in contact with the upper stopper 200 in response to an operation on the upper operable portion 5) is smaller than the bending degree of the piezoelectric element 7 resulting from an operation on the lower operable portion 5 (specifically, the bending degree of the piezoelectric element 7 resulting from the vibration member 3 coming in contact with the lower stopper 200 in response to an operation on the lower operable portion 5). Note that when the haptic feedback device 1D includes the upper stopper 200 having the same height position as the lower stopper 200, the slits 35 are, for example, shaped and positioned to cause the piezoelectric element 7 to bend by the same degree when the upper operable portion 5 is operated and when the lower operable portion 5 is operated.

In the haptic feedback device 1D, the degree by which the piezoelectric element 7 bends when the upper operable portion 5 is operated is different from the degree by which the piezoelectric element 7 bends when the lower operable portion 5 is operated. Thus, the controller 8 can determine, of the upper operable portion 5 and the lower operable portion 5, the operable portion 5 being operated based on the electromotive force generated in the piezoelectric element 7. For example, when the bending level based on the electromotive force generated in the piezoelectric element 7 is greater than or equal to the seventh threshold and less than the eighth threshold, the controller 8 determines that the upper operable portion 5 is operated. In contrast, the controller 8 determines that the lower operable portion 5 is operated when the bending level is greater than or equal to the eighth threshold.

As described above, the multiple stoppers 200 corresponding to the multiple operable portions 5 have different height positions, and can adjust the bending degree of the piezoelectric element 7 resulting from an operation on the operable portions 5.

Note that when the above haptic feedback device 1B includes multiple stoppers 200 corresponding to the multiple operable portions 5, at least some of the multiple stoppers 200 may have different height positions. For example, the stopper 200 corresponding to the operable portion 5c may have a lower height position than the stopper 200 corresponding to the operable portion 5a. In this case, the bending degree of the piezoelectric element 7a when the operable portion 5c is operated is greater than when the operable portion 5a is operated. Thus, the controller 8 can more easily determine, of the operable portion 5a and the operable portion 5c, the operable portion 5 being operated. In another example, the stopper 200 corresponding to the operable portion 5d may have a lower height position than the stopper 200 corresponding to the operable portion 5b. In this case, the bending degree of the piezoelectric element 7b when the operable portion 5d is operated is greater than when the operable portion 5b is operated. Thus, the controller 8 can more easily determine, of the operable portion 5b and the operable portion 5d, the operable portion 5 being operated.

The haptic feedback devices have been described in detail, but the above structures are illustrative in all respects, and the disclosure is not limited to the above structures. The above embodiments may be combined in any manner unless any contradiction arises. Many examples other than those illustrated above may also be implemented without departing from the scope of the present disclosure.

The present disclosure provides the structures described below.

**In** one embodiment, (1) a haptic feedback device includes a vibrator on which a user operation is performed and a first vibration actuator that vibrates the vibrator. The vibrator includes a vibration member and an elastic resin. The vibration member is to be vibrated by the first vibration actuator. The vibration member includes at least one slit. The elastic resin at least includes a portion closing the at least one slit.

(2) In the haptic feedback device according to (1), the elastic resin fills the at least one slit, and covers a surface of the vibration member.

(3) In the haptic feedback device according to (2), the first vibration actuator is a first piezoelectric element.

(4) The haptic feedback device according to (3) further includes a controller that determines that the vibrator is operated based on an electromotive force generated in the first piezoelectric element, and causes the first piezoelectric element to vibrate when determining that the vibrator is operated.

(5) In the haptic feedback device according to (4), the vibrator includes a first operable portion and a second operable portion operable by a user. A degree by which the first piezoelectric element bends when the first operable portion is operated is different from a degree by which the first piezoelectric element bends when the second operable portion is operated. The controller determines, of the first operable portion and the second operable portion, an operation portion being operated based on the electromotive force generated in the first piezoelectric element.

(6) The haptic feedback device according to (5) further includes a first stopper that stops deformation of the vibration member resulting from an operation on the first operable portion, and a second stopper that stops deformation of the vibration member resulting from an operation on the second operable portion. A distance between the first stopper and the vibration member when the vibrator is not operated is different from a distance between the second stopper and the vibration member when the vibrator is not operated.

(7) The haptic feedback device according to any one of (4) to (6) further includes a second piezoelectric element that vibrates the vibration member. The vibrator includes a third operable portion and a fourth operable portion operable by a user. The first piezoelectric element bends by a greater degree than the second piezoelectric element when the third operable portion is operated. The second piezoelectric element bends by a greater degree than the first piezoelectric element when the fourth operable portion is operated. The controller determines, of the third operable portion and the fourth operable portion, an operable portion being operated based on the electromotive force generated in the first piezoelectric element and an electromotive force generated in the second piezoelectric element.

### REFERENCE SIGNS

1, 1A, 1B, 1C, 1D haptic feedback device
2 vibrator
3 vibration member
4 elastic resin
5, 5a, 5b, 5c, 5d, 5e operable portion
7, 7a, 7b vibration actuator
35 slit
200 stopper

## Claims

1. A haptic feedback device, comprising:
a vibrator on which a user operation is performed; and
a first vibration actuator configured to vibrate the vibrator,
wherein the vibrator includes
a vibration member to be vibrated by the first vibration actuator, the vibration member including at least one slit, and
an elastic resin at least including a portion closing the at least one slit.

2. The haptic feedback device according to claim 1, wherein
the elastic resin fills the at least one slit, and covers a surface of the vibration member.

3. The haptic feedback device according to claim 2, wherein
the first vibration actuator is a first piezoelectric element.

4. The haptic feedback device according to claim 3, further comprising:
a controller configured to determine that the vibrator is operated based on an electromotive force generated in the first piezoelectric element, and cause the first piezoelectric element to vibrate when determining that the vibrator is operated.

5. The haptic feedback device according to claim 4, wherein
the vibrator includes a first operable portion and a second operable portion operable by a user,
a degree by which the first piezoelectric element bends when the first operable portion is operated is different from a degree by which the first piezoelectric element bends when the second operable portion is operated, and
the controller is configured to determine, of the first operable portion and the second operable portion, an operation portion being operated based on the electromotive force generated in the first piezoelectric element.

6. The haptic feedback device according to claim 5, further comprising:
a first stopper configured to stop deformation of the vibration member resulting from an operation on the first operable portion; and
a second stopper configured to stop deformation of the vibration member resulting from an operation on the second operable portion,
wherein a distance between the first stopper and the vibration member when the vibrator is not operated is different from a distance between the second stopper and the vibration member when the vibrator is not operated.

7. The haptic feedback device according to any one of claims 4 to 6, further comprising:
a second piezoelectric element configured to vibrate the vibration member,
wherein the vibrator includes a third operable portion and a fourth operable portion operable by a user,
the first piezoelectric element bends by a greater degree than the second piezoelectric element when the third operable portion is operated,
the second piezoelectric element bends by a greater degree than the first piezoelectric element when the fourth operable portion is operated, and
the controller is configured to determine, of the third operable portion and the fourth operable portion, an operable portion being operated based on the electromotive force generated in the first piezoelectric element and an electromotive force generated in the second piezoelectric element.
